# EUROPEAN PATENT APPLICATION

(11) **EP 2 226 283 A2**
(43) Date of publication of application: **08.09.2010**
(21) Application number: 10151607.8
(22) Date of filing: 26.01.2010
(51) Int. Cl.: B65H 54/40

(54) **Textile machinery**

(30) Priority: 03.03.2009 JP 2009049299
(71) Applicant: Murata Machinery, Ltd., 3 Minami Ochiai-cho, Kisshoin Minami-ku, Kyoto-shi, Kyoto (JP)
(72) Inventor: Masai, Tetsuji, Kyoto 612-8686 (JP); Miyake, Yasuo, Kyoto 612-8686 (JP)
(74) Representative: Liedl, Christine

(57) **Abstract**

An automatic winder includes a motor 51, a position sensor 56, a current detecting section 70, a pulse detecting section 55, and a motor control section 52. The position sensor 56 detects a magnetic pole position of a rotor of the motor 51. The current detecting sensor 70 detects electric current of the motor 51. The pulse detecting section 55 detects pulse according to the rotation of the motor 51. The motor control section 52 controls the rotation of the motor 51. The motor control section 52 includes a first control section 71 and a second control section 72. The first control section 71 controls the rotation of the motor 51 based on a detection result of the position sensor 56 and a detection result of the pulse detecting section 55. The second control section 72 controls the rotation of the motor 51 based on a detection result of the current detecting sensor 70 (Fig. 1).

## Description

### BACKGROUND OF THE INVENTION

### 1. Field of the Invention

The present invention relates to a textile machinery. More specifically, the present invention relates to a structure for controlling an electric motor of a textile machinery.

### 2. Description of the Related Art

A conventionally-known textile machinery such as a yarn winding machine directly or indirectly drives a winding bobbin by an electric motor to wind yarn around a surface of the winding bobbin and forms a package. Recently, in a textile machinery of this type, in order to improve efficiency, to downsize the machinery, and to extend lifetime of the machinery, a brushless Direct Current (DC) motor (hereinafter, referred to simply as a brushless motor) is used as the electric motor. For example, Japanese Unexamined Patent Application Publication No. 2003-267627 discloses a yarn winding machine using a brushless DC motor.

The brushless motor has a permanent magnet on a rotor and a plurality of coils on a stator. A motor control section switches electric current to be applied to the coils to rotate the rotor. A general brushless motor has a position sensor for detecting a magnetic pole position of the rotor. In the brushless motor having the position sensor, the motor control section controls voltage to be applied to the coils in accordance with the magnetic pole position of the rotor detected by the position sensor.

As one method of controlling the brushless motor, sensorless control (more precisely, position sensorless control) that estimates a position of the rotor without using a position sensor is known. The sensorless control controls voltage to be applied to each of the coils of the motor based on a back electromotive (counter-electromotive) force waveform generated in the coils. Japanese Unexamined Patent Application Publication No. 2003-267627 discloses that the brushless motor of the yarn winding machine may be controlled by the sensorless control.

1 In the textile machinery such as a yarn winding machine, in order to form a package of high quality, it is important to accurately control a rotational speed of a package within a wide rotational speed range from a low-speed area to a high-speed area. In the textile machinery such as a yarn winding machine, the package may be reversely rotated in order to pull a yarn end at the time of a yarn splicing operation, and it is preferable to perform accurate rotation control also at the time of reverse rotation. Following problems arise when the brushless motor having the position sensor is used in the textile machinery.

Generally, the position sensor of the brushless motor is provided with a lead-angle. This is because even when the voltage is applied to the coils, a magnetic force is not immediately generated due to inductance. In order to resolve such a temporal delay by carrying out a position detection in advance, an attachment phase of the position sensor is displaced. By providing the position sensor with a lead-angle, as long as the motor is being rotated at a specific speed that is appropriate with the lead-angle, the motor can be efficiently driven. However, at other rotational speeds, power factor and efficiency are reduced, and the control is deteriorated. Particularly, when the rotor is reversely rotated, phase displacement of the position sensor is further increased. As a result, the control is further deteriorated. Moreover, as described above, since the efficiency is reduced at rotational speeds other than the specific speed, the motor requires extra electric current, causing an increase in a size and cost of the motor and an increase in power consumption.

When the position sensor is provided with a lead-angle, the position where the position sensor is provided may vary among the brushless motors of a plurality of yarn winding units, and the control may also vary among the yarn winding units. As a signal from the position sensor, only a few pulses are output per one rotation of the rotor (although depending on the number of poles of the motor). Therefore, for smoothly driving the motor particularly at the time of low-speed rotation, temporal resolution of the signal of the motor is not sufficient. Accordingly, the control based on the detection results from the position sensor limits the rotational speed at which the motor can be efficiently operated.

In contrast, since the sensorless control does not have the above-described problems arising from the lead-angle of the position sensor, regardless of forward rotation or backward (reverse) rotation, the motor can be efficiently controlled within a wide speed area. However, since the sensorless control uses the back electromotive force generated in the coils, it is difficult to use such a back electromotive force when the back electromotive force is not generated at the time of stoppage of the rotor or when the back electromotive force is small at the time of low-speed rotation of the rotor. Therefore, in the general sensorless control, for example, when starting to rotate the motor from a stopped state, the rotor is tentatively rotated by applying a certain voltage signal to the coils regardless of the position of the rotor, and the sensorless control is started after the rotor reaches the rotational speed that generates a sufficient back electromotive force. Therefore, accurate rotation control cannot be carried out by the sensorless control at the time of low-speed rotation.

As described above, the control based on the position sensor and the sensorless control have advantages and disadvantages in their features, and control having their advantages is demanded. Japanese Unexamined Patent Application Publication No. 2003-267627 describes that the sensorless control may be used for controlling the brushless motor of the yarn winding machine, however, a specific structure thereof is not disclosed.

### SUMMARY OF THE INVENTION

In order to overcome the problems described above, preferred embodiments of the present invention provide a textile machinery that can control an electric motor efficiently and accurately regardless of a rotational speed.

According to an aspect of the present invention, a textile machinery includes an electric motor, a position sensor, a current detecting section, a pulse detecting section, and a motor control section. The position sensor detects a magnetic pole position of a rotor of the electric motor. The current detecting section detects electric current of the electric motor. The pulse detecting section detects pulse according to rotation of the electric motor. The motor control section controls the rotation of the electric motor. The motor control section includes a first control section and a second control section. The first control section controls the rotation of the electric motor based on a detection result of the position sensor and a detection result of the pulse detecting section. The second control section controls the rotation of the electric motor based on a detection result of the current detecting section.

The first control section can control rotational drive of the electric motor based on the detection result of the position sensor, and the second control section can control (position sensorless control) the rotation of the electric motor without using the position sensor. Accordingly, advantages and disadvantages of the drive-control using the position sensor and the position sensorless control are considered, and the electric motor can be controlled appropriately in accordance with situations. Even when the temporal resolution is insufficient with only the detection result of the position sensor, the first control section can supplementarily use the detection result of the pulse detecting section. Therefore, the motor can be smoothly driven even at the time of low-speed rotation without using an expensive encoder.

The first control section preferably controls the rotation of the electric motor when the rotational speed of the electric motor is less than a prescribed rotational speed. That is, since the induced voltage of the motor is low when the motor is stopped or when the motor is rotated at a low speed, it is difficult for the second control section to perform the position sensorless control based on the detection result of the current detecting section. In contrast, since the first control section controls the rotation of the electric motor based on the detection result of the position sensor, the first control section can appropriately control the electric motor even at the time of low-speed rotation. Since the first control section controls the motor by supplementarily using the detection result of the pulse detecting section in addition to the detection result of the position sensor, the first control section can smoothly drive the electric motor even at the time of low-speed rotation.

The second control section preferably controls the rotation of the electric motor when the rotational speed of the electric motor is equal to or more than the prescribed rotational speed. That is, when the rotational speed of the electric motor is equal to or more than a certain level of rotational speed, the second control section can easily control the electric motor based on the detection result of the current detecting section. Accordingly, regardless of the lead-angle of the position sensor, the advantages of the position sensorless control in which the electric motor can be efficiently driven within a wide rotational speed area can be achieved in good condition. Thus, the current can be reduced during an operation by efficiently driving the electric motor, and the manufacturing cost can be reduced by optimizing the electric motor and a power module.

The textile machinery includes a winding drum that makes contact with a package and rotationally drives the package. The electric motor is a winding drum driving motor that rotates the winding drum. That is, since the winding drum driving motor of the textile machinery needs to be accurately controlled within a wide rotational speed area ranging from low rotational speed to high rotational speed, it is particularly preferable to carry out the control by using the structure of the present invention.

In the textile machinery, the electric motor may be a package driving motor that directly drives and rotates the package. That is, since the package driving motor of the textile machinery needs to be accurately controlled within the wide rotational speed area ranging from low rotational speed to high rotational speed, it is particularly preferable to carry out the control by using the structure of the present invention.

In the textile machinery, the electric motor may be a spindle motor that applies twists to yarn by rotating a spindle. That is, since the spindle motor of the textile machinery needs to be accurately controlled within the wide rotational speed area ranging from low rotational speed to high rotational speed, it is particularly preferable to carry out the control by using the structure of the present invention.

### BRIEF DESCRIPTION OF THE DRAWINGS

Fig. 1 is a schematic view of a structure of a yarn winding unit of an automatic winder according to a first embodiment of the present invention.

Fig. 2 is a block diagram illustrating a functional structure of a motor control section.

Fig. 3 is a graph representing a relationship among a U-phase electric current waveform, a signal from a position sensor, and drum pulse.

Fig. 4 is a flowchart of a motor controlling operation carried out by the motor control section.

Fig. 5 is a schematic view of a yarn winding unit of an automatic winder according to a second embodiment of the present invention.

### DETAILED DESCRIPTION OF PREFERRED EMBODIMENTS

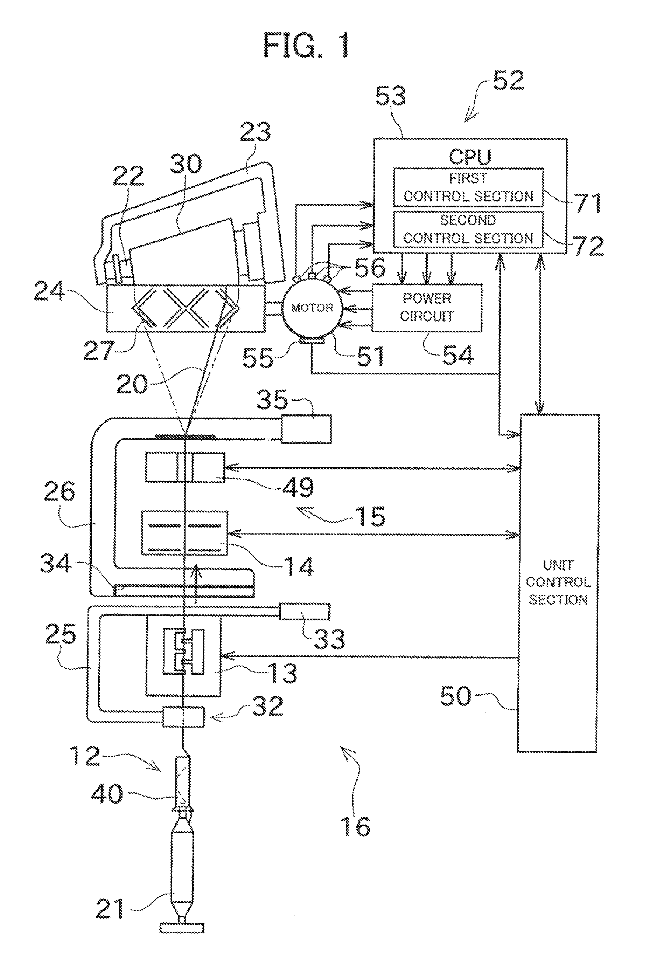

Next, preferred embodiments of the present invention will be described with reference to the drawings. A winder unit 16 illustrated in Fig. 1 winds spun yarn 20, which is unwound from a yarn supply bobbin 21, around a winding bobbin 22 while traversing the spun yarn 20 so as to form a package 30 of a prescribed shape and prescribed length. Each of the winder units 16 includes a unit control section 50 for controlling each component of the winder unit 16.

For example, the unit control section 50 includes a Central Processing Unit (CPU), a Random Access Memory (RAM), a Read Only Memory (ROM), and an Input and Output (I/O) port. The ROM stores a program for controlling each component of the winder unit 16.

The winder unit 16 includes an unwinding assisting device 12, a tension applying device 13, a splicer device 14, and a clearer (yarn quality measuring device) 15, which are arranged along a yarn traveling path between the yarn supply bobbin 21 and a winding drum 24 in this order from the yarn supply bobbin 21 side.

The unwinding assisting device 12 lowers a regulating member 40, which covers a core tube, in conjunction with unwinding of yarn from the yarn supply bobbin 21 so as to assist such unwinding of the yarn from the yarn supply bobbin 21. The regulating member 40 makes contact with a balloon that is formed above the yarn supply bobbin 21 by rotation and centrifugal force of the yarn unwound from the yarn supply bobbin 21, and thus, assists the yarn unwinding by controlling the balloon to be an appropriate size.

The tension applying device 13 applies prescribed tension to the traveling spun yarn 20. The tension applying device 13 may be a gate type in which movable comb-teeth are arranged relative to fixed comb-teeth. The tension applying device 13 can apply certain tension to the spun yarn 20 to be wound, which thereby can improve the quality of the package 30. In addition to the gate type, for example, the tension applying device 13 may be a disk type.

The splicer device 14 splices a lower yarn from the yarn supply bobbin 21 and an upper yarn from the package 30 at the time of yarn cutting performed when a yarn defect is detected by the clearer 15 or at the time of yarn breakage that occurs while unwinding the yarn from the yarn supply bobbin 21.

A clearer head 49 of the clearer 15 includes a not-illustrated sensor for detecting a thickness of the spun yarn 20. The clearer 15 monitors a yarn thickness signal sent from the sensor in order to detect a yarn defect. A not-illustrated cutter is provided near the clearer head 49 for immediately cutting the spun yarn 20 when the clearer 15 detects the yarn defect.

A lower yarn guide pipe 25 is provided below the splicer device 14 to catch and guide the lower yarn from the yarn supply bobbin 21 to the splicer device 14. The lower yarn guide pipe 25 can swing around a shaft 33. An upper yarn guide pipe 26 is provided above the splicer device 14 to catch and guide the upper yarn from the package 30 to the splicer device 14. The upper yarn guide pipe 26 can swing around a shaft 35. A suction opening 32 is provided at a tip end of the lower yarn guide pipe 25. A suction mouth 34 is provided at a tip end of the upper yarn guide pipe 26. An appropriate negative pressure source is connected with each of the lower yarn guide pipe 25 and the upper yarn guide pipe 26 to generate suction flow in the suction opening 32 and the suction mouth 34, and thus, yarn ends of the upper yarn and the lower yarn can be sucked and caught.

A cradle 23 and a winding drum 24 are provided further above the splicer device 14. The cradle 23 can hold the package 30 in a manner that the package 30 can be rotated. The winding drum 24 is provided facing the package 30.

The cradle 23 holds the package 30 in a manner that the package 30 is made into contact with the winding drum 24 with prescribed contact-pressure. The cradle 23 can swing the package 30 in a direction towards the winding drum 24 or in a direction away from the winding drum 24. Accordingly, even if yarn layers are accumulated on the package 30, gradually increasing a thickness thereof, such an increase in the thickness of the layered portion can be absorbed by the swinging of the cradle 23, and an outer peripheral surface of the package 30 can reliably make contact with the winding drum 24.

A spiral traverse groove 27 is formed on an outer peripheral surface of the winding drum 24. The winding drum 24 is connected with an output shaft of a motor (electric motor) 51 and rotationally driven by the motor 51. By rotationally driving the winding drum 24 by the motor 51 under a state in which the spun yarn 20 is introduced into the traverse groove 27, the package 30 that is in contact with the winding drum 24 is rotationally driven, and the spun yarn 20 can be wound around the outer peripheral surface of the package 30 while being traversed. Accordingly, the yarn layer is formed on the surface of the package 30.

The motor control section 52 controls the operation of the motor 51. The motor control section 52 is electrically connected with the unit control section 50. In order to produce the package 30 of an appropriate shape, the unit control section 50 appropriately outputs to the motor control section 52 a rotational speed instruction signal instructing a target rotational speed of the winding drum 24. A structure of the motor control section 52 will be described later.

The motor 51 is provided as a brushless DC motor. A structure of the brushless motor is well known, and therefore, a detailed description thereof is omitted. The motor 51 primarily includes a not-illustrated rotor made from permanent magnet and a not-illustrated stator having a plurality of coils composed of U-phase, V-phase, and W-phase.

The motor 51 includes three position sensors 56 at the stator for detecting a magnetic pole position of the rotor. The position sensor 56 is composed of a Hall IC. In the present preferred embodiment, the position sensor 56 is provided without lead-angle. Accordingly, when the motor 51 is rotated at low rotational speed, the motor 51 can be accurately operated with high efficiency regardless of the direction in which the rotor is rotated. Each of the three position sensors 56 is electrically connected with the motor control section 52 and outputs a detection signal in accordance with the position of the rotor to the motor control section 52.

A pulse detecting section 55 is attached to the motor 51. The pulse detecting section 55 detects a pulse signal at a frequency that is proportional to the rotational speed of the winding drum 24 (that is, the rotational speed of the motor 51). More specifically, the pulse detecting section 55 includes a not-illustrated disk-shaped magnet, which an outer peripheral portion is equally divided into a plurality of portions and which is multipole-magnetized, and the Hall IC, which is arranged to face the outer peripheral portion of the disk-shaped magnet. The disk-shaped magnet is rotated integrally with the rotor. When the rotor is rotated, a magnetic field is changed by the disk-shaped magnet that is rotated integrally with the rotor, and the Hall IC detects a prescribed number of pulse signals (in the present embodiment, 60 pulse signals) per one rotation of the rotor. The pulse signals are output to the motor control section 52 and the unit control section 50. In the following description, the pulse signals output by the pulse detecting section 55 are referred to as drum pulse in that the pulse is generated in accordance with the rotation of the winding drum 24.

The unit control section 50 can calculate an approximate length of the yarn wound around the package 30 by measuring the number of pulses of the drum pulse. Accordingly, the unit control section 50 can perform appropriate control in accordance with the winding diameter of the package 30.

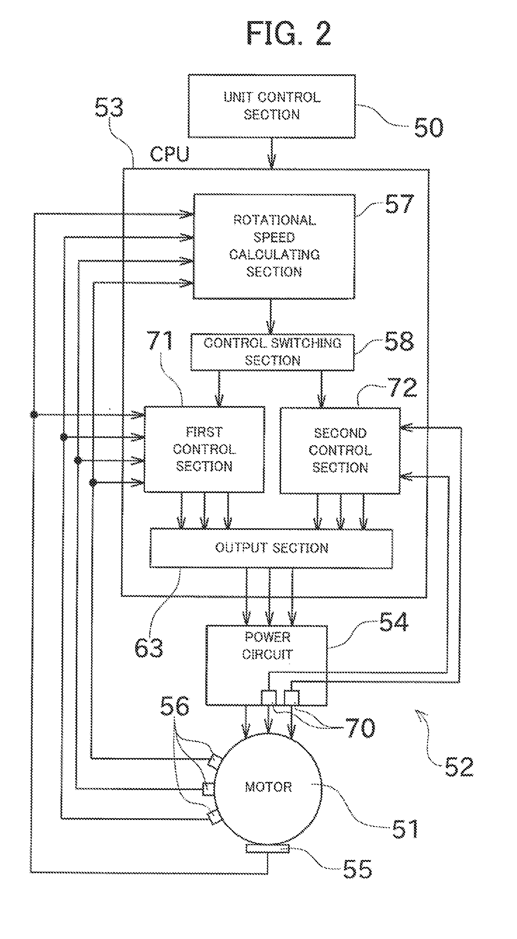

Next, the motor control section 52 will be described with reference to Fig. 2. As illustrated in Fig. 2, the motor control section 52 primarily includes a CPU 53 and a power circuit 54. The CPU 53 executes a prescribed program to function as a rotational speed calculating section 57, a control switching section 58, a first control section 71, a second control section 72, and an output section 63.

The rotational speed calculating section 57 measures time interval of at least one of the drum pulse and the detection signal of the position sensor 56 so as to calculate the present rotational speed of the winding drum 24 (i.e., the present rotational speed of the motor 51). Alternatively, two kinds of signals, that is, the drum pulse and the detection signal of the position sensor 56, may be used to calculate the rotational speed. When the rotation of the winding drum 24 reaches the high-speed rotation area, the resolution of the drum pulse becomes too fine. As a result, it becomes difficult to appropriately calculate the rotational speed of the motor 51 by detecting the drum pulse. The resolution of the detection signal of the position sensor 56 is coarse (rough) as compared with that of the drum pulse (detailed description will be made later). Therefore, in the high-speed rotation area of the motor 51, the rotational speed calculating section 57 measures an interval of the detection signals of the position sensor 56, which has a coarse resolution, to calculate the rotational speed of the motor 51. Meanwhile, in the low-speed rotation area of the motor 51, the rotational speed calculating section 57 measures an interval of the drum pulses, which has a fine resolution, to accurately calculate the rotational speed of the motor 51. Thus, from the high-speed rotation area through the low-speed rotation area, the rotational speed of the motor 51 can be calculated accurately, and the rotation of the motor 51 can be accurately controlled.

The control switching section 58 retrieves the function of the first control section 71 or the second control section 72 based on the present rotational speed of the winding drum 24 (i.e., the present rotational speed of the motor 51) calculated by the rotational speed calculating section 57.

In order to bring the rotational speed of the winding drum 24 closer to the target rotational speed, the first control section 71 and the second control section 72 calculate the voltage to be applied to the U-phase coil, the V-phase coil, and the W-phase coil and output a voltage control value to the output section 63. A detailed structure of the first control section 71 and the second control section 72 will be described later.

The output section 63 generates a switching signal for controlling the voltage to be applied to each of the U-phase coil, the V-phase coil, and the W-phase coil by Pulse-Width Modulation (PWM) based on the voltage control value output from the first control section 71 or the second control section 72. More specifically, the switching signal indicates "ON" or "OFF", i.e., the switching signal indicates whether or not to apply the voltage to each coil. The "ON" and "OFF" of the voltage are repeated at a high carrier frequency, and a time rate at which the voltage is turned "ON" is determined by a duty ratio that is proportional to the voltage control value.

The switching signal from the output section 63 of the CPU 53 is input to the power circuit 54. The power circuit 54 is electrically connected with each of the U-phase coil, the V-phase coil, and the W-phase coil. A direct current power source (not illustrated) of prescribed voltage is connected to the power circuit 54. By switching among the direct current power source and the coils of each phase based on the switching signal, the PWM-controlled voltage is applied to the coils of each phase, and an average value of the voltage applied to the coils of each phase can be set as a desired value. Accordingly, the electric current can be applied to the coils of each phase, and the motor 51 can be rotationally driven.

Electric current sensors (current detecting sections) 70 are connected with any two of connecting wires connected to the three coils from the power circuit 54. Each of the electric current sensors 70 outputs a signal that is proportional to a magnitude of the electric current applied to the corresponding coil. An Analog to Digital (A/D) conversion is carried out on the signal output from each of the electric current sensors 70, and the signal is input to the CPU 53 as an electric current value signal. The electric current sensors 70 may be connected with each of the connecting wires for all coils of three phases. However, when two electric current values are detected, the remaining one electric current value can be obtained by calculation. Therefore, in order to reduce cost, the electric current sensors 70 are connected only with the two connecting wires.

Next, a description will be made on the first control section 71. The first control section 71 calculates a voltage value of the voltage to be applied to each coil of three phases based on the rotational speed instruction signal sent from the unit control section 50 and the signals sent from the three position sensors 56, and then outputs the voltage values to the output section 63. In the present embodiment, the first control section 71 performs sine-wave drive on the brushless motor so as to smoothly drive the rotor at the time of low-speed rotation of the motor 51. That is, the first control section 71 controls the voltage such that the electric current that is changed in a sine-wave shape in which phases are displaced by approximately 120 degrees is applied to the coils of three phases. For example, amplitude of the sine-wave shaped electric current is changed by Proportional-Integral (PI) control based on the target rotational speed and the present rotational speed of the motor 51. When increasing the rotational speed of the motor 51, the first control section 71 outputs the voltage control value that further increases the amplitude of the sine-wave shaped electric current. When reducing the rotational speed of the motor 51, the first control section 71 outputs the voltage control value that further reduces the amplitude of the sine-wave shaped electric current.

In order to efficiently drive the motor 51, the phase of the sine-wave shaped electric current needs to be adjusted according to the magnetic pole position the rotor. As is well known, the resolution of the rotor position detection by the three Hall ICs (position sensors 56) is six steps per electric angle of 360 degrees (i.e., the resolution of electric angle of 60 degrees), and the accuracy of the position detection is insufficient for the sine-wave drive. According to a well-known method, in such a case, the position of the rotor is detected highly accurately by an encoder. However, in the present embodiment, the accuracy of the position detection is improved by supplementarily using the pulse signal sent from the pulse detecting section 55.

As described above, the pulse detecting section 55 detects 60 pulse signals per one rotation of the rotor. The motor 51 according to the present embodiment uses an octal rotor (a rotor with eight poles) having four S-and-N pairs. Accordingly, the pulse detecting section 55 can detect 15 pulses per electrical angle of 360 degrees (i.e., the resolution of the electric angle is 24 degrees). Thus, by using the drum pulse from the pulse detecting section 55, the change in the phase of the rotor can be detected with higher resolution than that of the position sensor 56.

The pulse detecting section 55 is originally provided to a conventional automatic winder for calculating the length of the yarn wound around the package 30 by the unit control section 50. Therefore, further cost increase can be prevented. However, with the pulse signals of the pulse detecting section 55, although the relative phase change of the rotor can be detected, an absolute magnetic pole position of the rotor cannot be detected. Accordingly, the first control section 71 performs the control by complementally using both the position sensor 56 and the pulse detecting section 55.

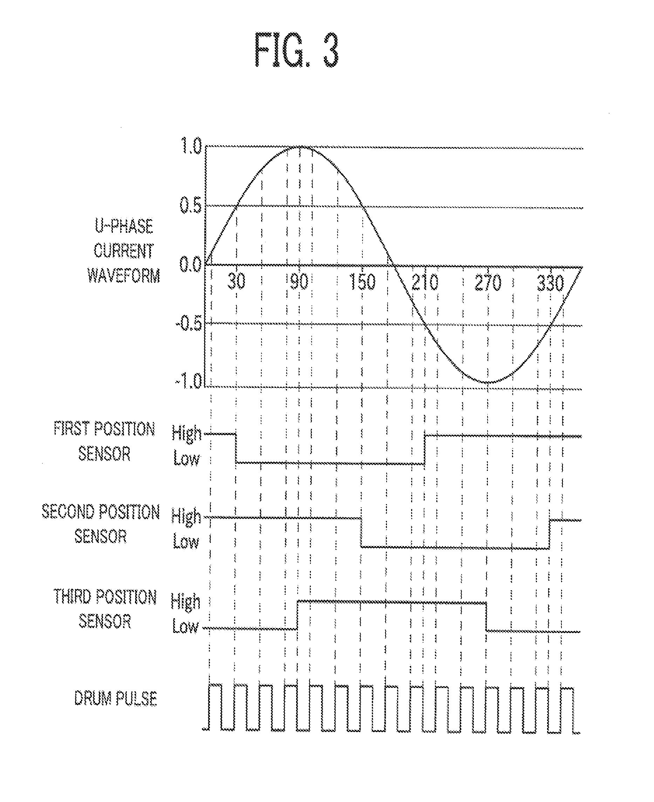

A specific description will be made with reference to Fig. 3. The graph of Fig. 3 illustrates a relationship among the electric current applied to the U-phase coil, the signal from the position sensor 56, and the drum pulse in the case where the first control section 71 controls the drive of the motor 51. The horizontal axis of the graph indicates the phase of the electric current waveform to be applied to the U-phase coil. Fig. 3 illustrates that by referring to the timing at which the signal of the position sensor 56 is switched and to the detection timing of the drum pulse, the phase of the electric current to be applied to the U-phase coil can be determined.

As is well known, by detecting the timing at which the signal of the position sensor 56 is switched, the phase of the electric current to be applied to the coils of each phase can be determined. For example, in Fig. 3, it can be determined that when a state in which the signals of the first position sensor and the second position sensor indicate "High" and the signal of the third position sensor indicates "Low" is switched to a state in which the signal of the first position sensor indicates "Low", the phase of the electric current to be applied to the U-phase coil should be 30 degrees. However, as described above, with the signals of the position sensors 56 alone, the phase of the electric current to be applied to each coil can be detected only at intervals of 60 degrees.

As described above, since the absolute magnetic pole position of the rotor cannot be detected by the drum pulse, the phase of the electric current to be applied to the coils cannot be directly detected by the drum pulse alone. Therefore, while detecting the phase of the electric current applied to the coils at intervals of 60 degrees by the signals from the three position sensors 56, the change in the relative electric current phases is acquired based on the drum pulse having high resolution, and the absolute electric current phases are corrected. Thus, the phase of the electric current to be applied to the coils can be controlled finely.

The first control section 71 measures time intervals at which the drum pulse is output and calculates the rotational speed of the rotor of the motor 51. Since the relative change in the position of the rotor can be calculated based on the rotational speed, the phase of the electric current to be applied to the coils can be estimated even during the period between the drum pulse detections. Accordingly, the phase of the electric current to be applied to the coils can be controlled even more finely. The calculation result of the rotational speed calculating section 57 may be used as the rotational speed.

Although Fig. 3 illustrates only the U-phase electric current waveform, the electric current can also be applied to the V-phase coil and the W-phase coil by carrying out similar control with the respective electric current phases being offset.

Next, a description will be made on the second control section 72. The second control section 72 calculates a voltage value of the voltage to be applied to each coil of three phases based on the rotational speed instruction signal sent from the unit control section 50 and the signals sent from the electric current sensors 70, and outputs the voltage values to the output section 63. That is, the second control section 72 drives the motor by position sensorless control, which is not based on the signal from the position sensor 56. In the present embodiment, the second control section 72 can perform sensorless sine-wave drive based on the electric current values detected by the electric current sensors 70. Since the sensorless sine-wave control is already known, a detailed description thereof will be omitted. The sensorless sine-wave control predicts the rotational position of the rotor from the electric current values.

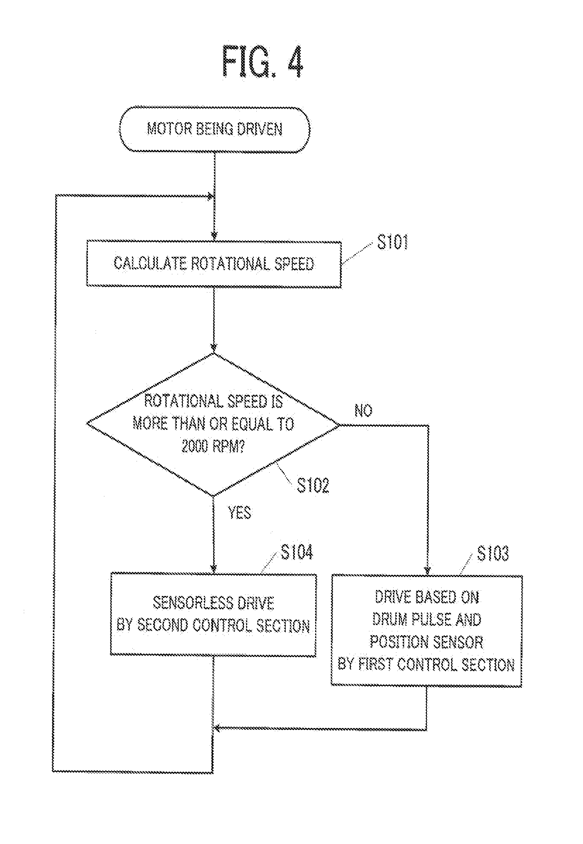

Next, with reference to Fig. 4, a method of controlling the motor will be described according to the present preferred embodiment. Fig. 4 is a flowchart of an operation of controlling the motor 51 by the motor control section 52. When the flow of Fig. 4 is started, the rotational speed calculating section 57 calculates the rotational speed of the motor 51 based on the drum pulse of the pulse detecting section 55 and/or the detection signal of the position sensor 56 (step S101). Then, the control switching section 58 retrieves either the first control section 71 or the second control section 72 based on the rotational speed (determination of step S102), and controls the voltage to be applied to the coils. In the present preferred embodiment, the control switching section 58 retrieves either the first control section 71 or the second control section 72 based on whether or not the rotational speed is equal to or more than (at least) 2000rpm.

At the time of low-speed rotation of the motor 51 (i.e., when the rotational speed is less than 2000rpm), the control switching section 58 retrieves the first control section 71 (step S103). As described above, the first control section 71 executes the control based on the signal of the position sensor 56. Suppose that the second control section 72 performs the sensorless control in the process of step S103. Then, it is highly unlikely that sufficient induced voltage can be acquired, and the rotation of the motor 51 cannot be stably controlled. In contrast, since the first control section 71 performs the control using the position sensor, it is not necessary to consider the induced voltage, and control operation can be accurately carried out for starting to rotate the motor 51 from a stopped state ,and the control can also be carried out accurately at the time of low-speed rotation.

As described above, since the position sensors 56 are not provided with lead-angle in the present preferred embodiment, the motor 51 can be efficiently operated particularly at the time of low-speed rotation. Since the detection result of the position sensor 56 is corrected using the drum pulse, the sine-wave drive can be smoothly carried out on the motor 51 even at the time of low-speed rotation of the motor 51. As described above, since the first control section 71 excels in controlling the motor 51 particularly at the time of low-speed rotation, the first control section 71 is used in the control in the low-speed rotation area, which is less than 2000rpm in the present embodiment.

At the time of high-speed rotation (equal to or more than 2000rpm) of the motor 51, the control switching section 58 retrieves the second control section 72 (step S104). As described above, the second control section 72 performs the position sensorless control. That is, the sensorless control cannot be carried out when the rotor of the motor 51 is stopped or being rotated at low speed. However, once the rotational speed of the motor 51 is increased to some degree by the first control section 71, sufficient induced voltage is generated in the coils, and thus, the second control section 72 can perform the sensorless control.

In the present preferred embodiment, since the position sensor 56 is not provided with lead-angle, if the first control section 71 operates the motor 51, the higher the rotational speed of the motor 51 is, the more the operation efficiency of the motor 51 is reduced. On the other hand, since the second control section 72 does not use the position sensor, reduction in the operation efficiency of the motor 51 caused by the change in the rotational speed of the motor 51 is small. In the sensorless control, the motor is controlled based on the electric current that has been actually applied to the coils. Therefore, voltage can be applied to the coils with ideal electric current phase. As described above, since the second control section 72 can efficiently control the motor 51 in a speed area that is other than the low-speed rotation area, in the present preferred embodiment, the second control section 72 is used to control the motor 51 in the speed area in which the rotational speed of the motor 51 is or equal to or more than 2000rpm.

In the present preferred embodiment, since the position sensor 56 is not provided with lead-angle as described above, the motor 51 can be efficiently controlled in the above-described flow regardless of the direction of the rotation of the rotor of the motor 51, i.e., whether the rotor is rotated clockwise or counterclockwise.

As described above, the automatic winder according to the present preferred embodiment includes the motor 51, the position sensor 56, the electric current sensor 70, the pulse detecting section 55, and the motor control section 52. The position sensor 56 detects the magnetic pole position of the rotor of the motor 51. The electric current sensor 70 detects the electric current of the motor 51. The pulse detecting section 55 detects pulse according to the rotation of the motor 51. The motor control section 52 controls the rotation of the motor 51. The motor control section 52 includes the first control section 71 and the second control section 72. The first control section 71 controls the rotation of the motor 51 based on the detection result of the position sensor 56 and the detection result of the pulse detecting section 55. The second control section 72 controls the rotation of the motor 51 based on the detection result of the electric current sensor 70.

In the above-described structure, the first control section 71 can control the motor 51 based on the detection result of the position sensor 56, and the second control section 72 can perform the control without the position sensor 56 (position sensorless control). Thus, advantages and disadvantages of the drive-control using the position sensor 56 and the position sensorless control are considered, and accordingly, the motor 51 can be appropriately controlled in accordance with situations. Even when the temporal resolution is insufficient with the detection result of the position sensor 56 alone, the first control section 71 can supplementarily use the detection result of the pulse detecting section 55. Therefore, the motor 51 can be smoothly driven even at the time of low-speed rotation without using an expensive encoder.

In the automatic winder according to the present preferred embodiment, the first control section 71 controls the rotation of the motor 51 when the rotational speed of the motor 51 is less than a prescribed rotational speed. That is, since the induced voltage of the motor 51 is low when the motor 51 is stopped or being rotated at low speed, it is difficult for the second control section 72 to perform the position sensorless control based on the detection result of the electric current sensor 70. In contrast, since the first control section 71 controls the motor 51 based on the detection result of the position sensor 56, the motor 51 can be appropriately controlled even at the time of low-speed rotation. Since the first control section 71 performs the control supplementarily using the detection result of the pulse detecting section 55 in addition to the detection result of the position sensor 56, the first control section 71 can smoothly drive the motor 51 even at the time of low-speed rotation of the motor 51.

In the automatic winder according to the present preferred embodiment, the second control section 72 controls the rotation of the motor 51 when the rotational speed of the motor 51 is equal to or more than the prescribed rotational speed. That is, when the rotational speed of the motor 51 is equal to or more than (at least) a certain rotational speed, the second control section 72 can easily perform the control based on the detection result of the electric current sensor 70. Accordingly, advantages of the position sensorless control can be achieved such that the motor 51 can be efficiently driven within a wide rotational speed area without providing the position sensor 56 with lead-angle. As described above, since the motor 51 is efficiently driven, the electric current can be reduced when operating the motor 51, and manufacturing cost can be reduced by optimizing the motor 51 and a power module.

The automatic winder according to the present preferred embodiment includes the winding drum 24 arranged to make contact with the package 30 and rotationally drive the package 30. The motor 51 is a winding drum driving motor that rotates the winding drum 24. That is, since the winding drum driving motor of the automatic winder needs to be accurately controlled within the wide rotational speed area ranging from the low-speed rotation to the high-speed rotation, it is particularly preferable to perform the control by using the structure of the present invention.

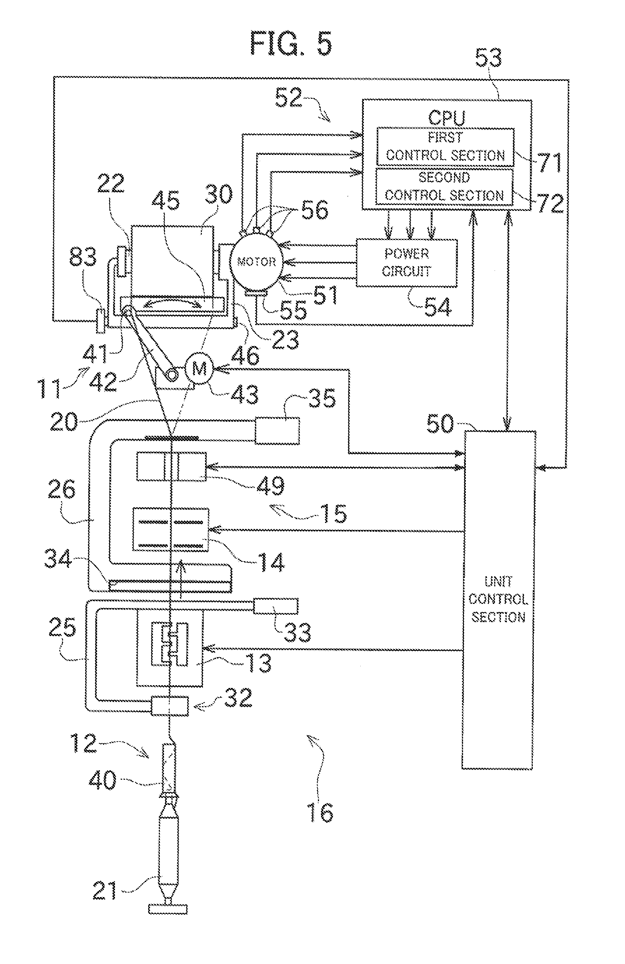

Next, a second preferred embodiment of the present invention will be described. Fig. 5 is a schematic view of the winder unit 16 of the automatic winder according to the second preferred embodiment. In the following description, a structure similar to or corresponding to that of the first preferred embodiment is given like reference numerals in the drawings, and description thereof may be omitted.

The winder unit 16 according to the present preferred embodiment includes the cradle 23 arranged to hold the winding bobbin 22 such that the winding bobbin 22 can be rotated, an arm-type traverse device 11 arranged to traverse the spun yarn 20, and a contact roller 45 that can make contact with a peripheral surface of the winding bobbin 22 or a peripheral surface of the package 30 to be rotationally driven.

The motor 51 is attached to a portion of the cradle 23 where the cradle 23 holds the winding bobbin 22. The motor 51 is different from that of the first preferred embodiment, and is arranged to directly drive and rotate the package 30 (the winding bobbin 22) to wind the spun yarn 20. The operation of the motor 51 is controlled by the motor control section 52 that is similar to that of the first preferred embodiment.

An analog-type angle sensor 83 is provided on a swing shaft 46 of the cradle 23 for detecting the angle (swing angle) of the cradle 23. The angle of the cradle 23 changes as the diameter of the package 30 increases. A radius of the yarn layer of the package 30 can be detected by detecting the swing angle of the cradle 23 by the angle sensor 83. Accordingly, the yarn can be appropriately traversed by controlling the traverse device 11 in accordance with the radius of the package 30. The angle sensor 83 may be a digital sensor, and other devices may be used if such devices can detect the radius of the package 30.

The traverse device 11 is provided near the contract roller 45. The traverse device 11 includes an elongate arm member 42 that can swing around a supporting shaft, a hook-shaped traverse guide 41 provided on a tip end of the arm member 42, and a traverse guide driving motor 43 arranged to drive the arm member 42. The spun yarn 20 is traversed by reciprocatingly swinging the arm member 42 by the traverse guide driving motor 43 as indicated by an arrow of Fig. 5. The unit control section 50 controls the operation of the traverse guide driving motor 43.

As described above, in the automatic winder according to the present preferred embodiment, the motor 51 is the package driving motor that directly drives and rotates the package 30. That is, also in the automatic winder that directly drives the package by the motor, the motor needs to be accurately controlled within the wide rotational speed area ranging from the low-speed rotation to the high-speed rotation, and therefore, it is particularly preferable to perform the control by using the structure of the present invention.

The preferred embodiments of the present invention have been described, however, the above-described structure may be modified, for example, as follows.

The automatic winder as the textile machinery has been described in the preferred embodiments, however, the present invention is not limited to the automatic winder and may be applied to other textile machinery. For example, in a spindle unit of a two-for-one twister as textile machinery, a brushless motor may be used as a spindle motor for driving and rotating a spindle, and the spindle motor may be controlled by using a motor control section that is similar to that of the above-described preferred embodiments.

The spindle applies twists to the yarn by being rotated. In the two-for-one twister, it is important to accurately control a rotational speed of the spindle for maintaining the number of twists of the yarn constant. By controlling the spindle motor similarly to that of the first preferred embodiment, the spindle motor can be efficiently and accurately controlled in a low-speed rotation area and a high-speed rotation area, and a package of high quality can be produced. That is, the spindle motor of the two-for-one twister needs to be accurately controlled within a wide rotational speed area ranging from low-speed rotation to high-speed rotation, and therefore, it is particularly preferable to perform the control by using the structure of the present invention.

The rotational speed of the motor 51 as a boundary where the control is switched between the first control section 71 and the second control section 72 is not limited to 2000rpm as in the above-described preferred embodiments, but may be appropriately modified in accordance with situations.

## Claims

1. A textile machinery comprising:
an electric motor (51);
a position sensor (56) that detects a magnetic pole position of a rotor of the electric motor (51);
a current detecting section (70) that detects electric current of the electric motor (51);
a pulse detecting section (55) that detects pulse according to rotation of the electric motor (51); and
a motor control section (52) that controls the rotation of the electric motor (51),
**characterized in that** the motor control section (52) includes:
a first control section (71) that controls the rotation of the motor in accordance with a detection result of the position sensor (56) and a detection result of the pulse detection section (55); and
a second control section (72) that controls the rotation of the electric motor (51) in accordance with a detection result of the current detecting section (70).

2. The textile machinery according to claim 1, **characterized in that** the first control section (71) controls the rotation of the electric motor (51) when a rotational speed of the electric motor (51) is less than a prescribed rotational speed.

3. The textile machinery according to claim 1 or claim 2, **characterized in that** the second control section (72) controls the rotation of the electric motor (51) when a rotational speed of the electric motor (51) is at least the prescribed rotational speed.

4. The textile machinery according to any one of claim 1 through claim 3, **characterized by** further comprising a winding drum that makes contact with a package and rotationally drives the package, and **characterized in that** the electric motor (51) is a winding drum driving motor that rotates the winding drum.

5. The textile machinery according to any one of claim 1 through claim 3, **characterized in that** the electric motor (51) is a package driving motor that directly drives and rotates a package.

6. The textile machinery according to any one of claim 1 through claim 3, **characterized in that** the electric motor (51) is a spindle motor that rotates a spindle to apply twists to yarn.
